(19) **Europäisches Patentamt**

**European Patent Office**

**Office européen des brevets**

(11) **EP 0 972 679 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(51) Int Cl.:
*B60Q 1/48* *(2006.01)*     *B60Q 1/52* *(2006.01)*

(21) Anmeldenummer: **99110434.0**

(22) Anmeldetag: **29.05.1999**

(54) **Verfahren und Einrichtung zur Unterstützung des Fahrers eines Fahrzeuges bei Rückwärtsfahrt**

Process and device for helping a driver during backing

Procédé et dispositif pour aider un conducteur en marche arrière

(84) Benannte Vertragsstaaten:
**DE FR GB IT NL SE**

(30) Priorität: **11.07.1998 DE 19831262**

(43) Veröffentlichungstag der Anmeldung:
**19.01.2000 Patentblatt 2000/03**

(73) Patentinhaber: **WABCO GmbH & Co. OHG**
**30453 Hannover (DE)**

(72) Erfinder:
 • **Pietsch, Frank**
  **30952 Ronnenberg (DE)**
 • **Neuhaus, Detlev**
  **30519 Hannover (DE)**

(74) Vertreter: **Schrödter, Manfred**
**WABCO GmbH & Co. OHG**
**Postfach 91 12 62**
**30432 Hannover (DE)**

(56) Entgegenhaltungen:
**DE-A- 4 201 806     DE-A- 4 201 970**
**US-A- 3 841 427     US-A- 5 748 141**

 • **PATENT ABSTRACTS OF JAPAN vol. 097, no. 006, 30. Juni 1997 (1997-06-30) & JP 09 048263 A (NISSAN MOTOR CO LTD), 18. Februar 1997 (1997-02-18)**

## Beschreibung

Die Erfindung betrifft ein Verfahren sowie eine Einrichtung zur Unterstützung des Fahrers eines Fahrzeuges bei Rückwärtsfahrt gemäß den Oberbegriffen der Patentansprüche 1 und 9.

Eine Einrichtung ist aus der DE 44 04 527 A1 bekannt.

Bei Fahrzeugen, insbesondere bei Lastkraftwagen und Anhängern bzw. Aufliegern, besteht häufig die Notwendigkeit, rückwärts an ein Hindernis heranzufahren, z. B. beim Einparken oder beim Heranfahren an eine Laderampe. Hierbei ist es oftmals erwünscht, daß eine möglichst dichte Annäherung an das Hindernis möglich ist, ohne daß eine Beschädigung infolge eines Aufpralls auf das Hindernis auftritt. Im Falle eines Lastkraftwagens, der rückwärts an eine Laderampe heranfährt, kann es zudem erwünscht sein, daß eine Berührung zwischen der Ladefläche des Lastkraftwagens und der Laderampe eintritt, wobei ebenfalls Beschädigungen an dem Lastkraftwagen und der Laderampe vermieden werden sollen.

Bei der bekannten Einrichtung ist ein Abstandssensor vorgesehen, der den Abstand des Fahrzeughecks zu einem Hindernis ermittelt. Des weiteren ist eine im Blickfeld des Fahrers angeordnete Anzeigeeinrichtung vorgesehen, die die von dem Abstandssensor ermittelten Abstandswerte anzeigt. Hierdurch kann der Fahrer beim Rückwärtsfahren den Abstand zu dem Hindernis ablesen.

Bei der bekannten Einrichtung liegt es im Ermessen des Fahrers, eine geeignete Geschwindigkeit beim Heranfahren an das Hindernis zu wählen bzw. zu einem geeigneten Zeitpunkt das Fahrzeug abzubremsen oder zum Stillstand zu bringen. Hierbei kann es vorkommen, daß durch eine Fehleinschätzung des Fahrers ein relativ heftiger Aufprall des Fahrzeuges auf das Hindernis auftritt, was Beschädigungen an dem Fahrzeug oder dem Hindernis zur Folge haben kann.

Aus der gattungsgemäßen DE 42 01 806 A1 ist eine Rückwärtsfahrhilfe für Automobile bekannt, welche die Entfernung zwischen dem Automobil und einem hinter diesem liegenden Hindernis mittels Ultraschallwellen messen kann. Das Gerät ist direkt mit dem Bremssystem verbunden und blockiert bei der Unterschreitung einer vorgegebenen Mindestdistanz zwischen dem Automobil und dem Hindernis automatisch die Bremsen.

Aus den Patent Abstracts of Japan, JP 09048263, ist eine Antriebssteuerungsvorrichtung bekannt, bei der die Drosselsteuerung automatisch in Abhängigkeit von einem Entfernungssignal gesteuert wird. Zusätzlich wird eine Bremsdrucksteuerung in Abhängigkeit von dem Entfernungssignal vorgenommen. Eine Unterstützung des Fahrers des Fahrzeuges bei Rückwärtsfahrt ist dort nicht vorgesehen, ebenso wenig wie die Erfassung des Abstands des Fahrzeughecks zu einem Hindernis.

Der Erfindung liegt daher die Aufgabe zugrunde, ein Verfahren und eine Einrichtung zur Unterstützung des Fahrers eines Fahrzeuges bei Rückwärtsfahrt anzugeben, wobei eine Beschädigung an dem Fahrzeug oder dem Hindernis sicher verhindert wird.

Diese Aufgabe wird durch die in den Patentansprüchen 1 und 9 angegebenen Ausführungsformen der Erfindung gelöst. In den Unteransprüchen sind vorteilhafte Weiterbildungen der Erfindung angegeben.

Die Erfindung hat den Vorteil, daß das Fahrzeug unabhängig von dem Verhalten des Fahrers entweder kurz vor dem Hindernis oder bei geringfügiger Berührung des Hindernisses automatisch zum Stillstand gebracht wird. Hierbei ist der Fahrer davon entlastet, auf einer Anzeigeeinrichtung dargestellte Abstandswerte zu beobachten und korrekt auszuwerten, und kann sich somit besser auf die Betätigung der übrigen Bedienelemente des Fahrzeuges konzentrieren. Dies erleichtert dem Fahrer das Heranfahren an ein Hindernis bei Rückwärtsfahrt erheblich, und es werden außerdem Schäden und daraus entstehende Reparaturkosten vermieden.

Ein weiterer Vorteil der Erfindung ist, daß das Fahrzeug auch von einem ungeübten Fahrer ohne spezielle Einweisung sicher bedient werden kann, da die Abbremsung des Fahrzeuges aus einer beliebigen, auch unangemessen hohen Geschwindigkeit vollautomatisch vorgenommen wird.

Zur Ermittlung der Fahrzeuggeschwindigkeit können in vorteilhafter Weise beliebige, in dem Fahrzeug bereits vorhandene Sensoren zur Ermittlung einer Geschwindigkeitsinformation verwendet werden. So können beispielsweise Signale von Sensoren eines Antiblockiersystems, welche die Drehgeschwindigkeiten einzelner Räder ermitteln, oder ein Geschwindigkeitssignal des Tachometers verwendet werden.

In einer vorteilhaften Weiterbildung der Erfindung wird die Geschwindigkeit des Fahrzeuges aus der zeitlichen Änderung des Abstandssignals bestimmt, z. B. durch numerische Differentiation. Hierdurch ist das Verfahren auch bei Fahrzeugen ohne eigene Geschwindigkeitssensoren kostengünstig anwendbar. Bei Heranziehung zusätzlicher Geschwindigkeitssignale von Geschwindigkeitssensoren der zuvor erwähnten Art kann eine Plausibilitätskontrolle dieser Signale durch Vergleich durchgeführt werden, wodurch ein Fehlansprechen des erfindungsgemäßen Verfahrens zuverlässig vermieden werden kann.

Eine vorteilhafte Ausführungsform der Erfindung ist als Einrichtung ausgebildet, welche neben einem Abstandssensor und einer Auswerteeinrichtung für die Signale des Abstandssensors noch Mittel zur Beeinflussung der Geschwindigkeit des Fahrzeuges aufweist. Derartige Mittel können eine elektrische oder elektronische Steuerung des Fahrzeugmotors und/oder der Fahrzeugbremsanlage umfassen. Insbesondere bei aus Zugmaschine und Anhänger bzw. Auflieger bestehendem Fahrzeugzug weisen die Mittel zur Beeinflussung der Geschwindigkeit des Fahrzeuges in vorteilhafter Weise noch eine Datenschnittstelle zwischen dem Zugfahrzeug und dem Anhänger bzw. Auflieger zur Übermittlung von Steuerdaten für den Antriebsmotor und/oder die Bremsanlage auf.

Die Erfindung wird im folgenden anhand eines Ausführungsbeispiels unter Zuhilfenahme von Zeichnungen näher erläutert.

Es zeigen

Fig. 1 einen sich bei Rückwärtsfahrt einer Laderampe nähernden Fahrzeugzug in schematischer Darstellung und

Fig. 2 eine Detailansicht eines Rammpuffers mit darin befindlichem Abstandssensor und

Fig. 3 eine heckseitige Ansicht des Fahrzeugzuges gemäß Fig. 1 als perspektivische Darstellung und

Fig. 4 die die Erfindung betreffenden Komponenten des Fahrzeugzuges in schematischer Darstellung.

Es werden in den Figuren gleiche Bezugszeichen für einander entsprechende Teile und Signale verwendet.

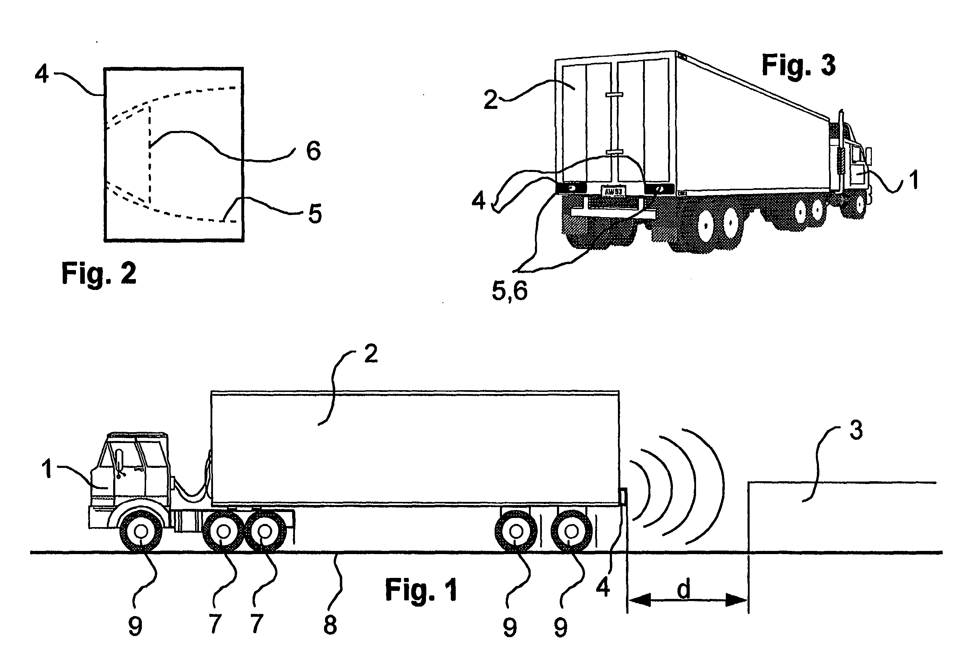

In der Fig. 1 ist ein Fahrzeug am Beispiel eines Fahrzeugzuges an sich bekannter Bauart mit einer Sattelzugmaschine (1) und einem an die Sattelzugmaschine angekoppelten Auflieger (2) dargestellt.

Die Sattelzugmaschine (1) weist einen Antriebsmotor auf, dessen Antriebskraft über ein von dem Fahrer des Fahrzeuges betätigbares Getriebe an die Antriebsräder (7) der Sattelzugmaschine (1) und somit an die Fahrbahn (8) abgegeben wird. Antriebsmotor und Getriebe sind ebenfalls von bekannter Bauart und daher in der Fig. 1 nicht dargestellt.

Des weiteren weist sowohl die Sattelzugmaschine (1) als auch der Auflieger (2) jeweils eine Bremsanlage auf, mittels der in Abhängigkeit von der Betätigung eines in der Sattelzugmaschine (1) angeordneten Bremspedals bei Betätigung durch den Fahrer eine Bremskraft auf die Räder (7, 9) der Sattelzugmaschine (1) und des Aufliegers (2) ausgeübt werden kann.

In einer bevorzugten Ausführungsform sind sowohl der Antriebsmotor als auch die Bremsanlagen von Sattelzugmaschine und Auflieger mittels elektrischer Signale steuerbar. Derartige Bremsanlagen bezeichnet man üblicherweise als elektrisch steuerbare Bremssysteme oder kurz EBS, wie beispielsweise aus der EP 0 602 353 A1 bekannt. Zur Steuerung der Bremsanlage ist dann mindestens ein elektronisches Steuergerät vorgesehen, welches Bremsanforderungssignale von einem von dem Fahrer mittels des Bremspedals betätigbaren Bremswertgeber empfängt und hieraus Bremsbetätigungssignale bestimmt, die an die an den Rädern (7, 9) angeordneten Bremseinrichtungen abgegeben werden.

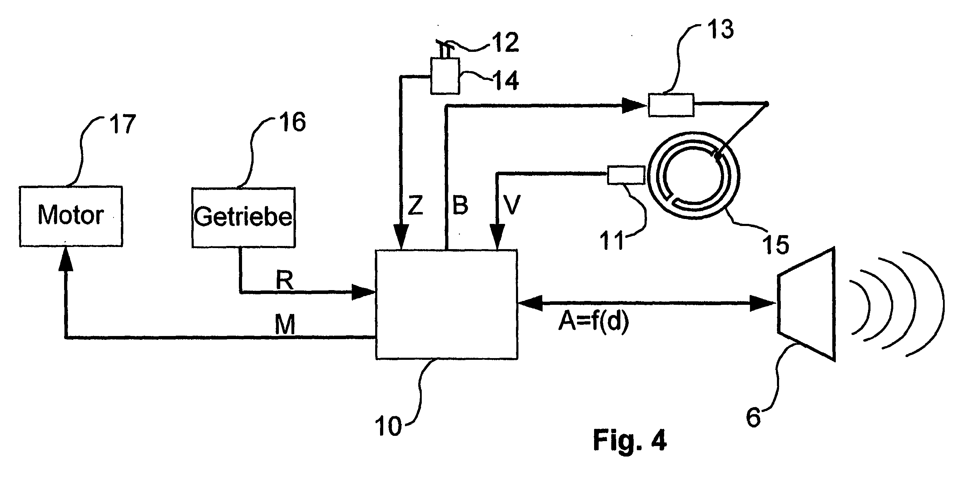

Des weiteren ist ein Sensor (11) zur Ermittlung eines Geschwindigkeitssignals (V) vorgesehen, wie in der Fig. 4 schematisch dargestellt. Es ist möglich, hierfür den Tachometer des Fahrzeuges zu verwenden. In einer bevorzugten Ausführungsform wird ein in der Nähe eines Fahrzeugrades angeordneter Sensor zur Ermittlung der Drehgeschwindigkeit des Rades, wie von Antiblockiersystemen her bekannt ist, verwendet. Dies hat den Vorteil, daß aus dem Geschwindigkeitssignal (V) die Fahrzeuggeschwindigkeit sehr zuverlässig und mit einer hohen Genauigkeit ermittelt werden kann.

Das Fahrzeug gemäß Fig. 1 weist des weiteren zwei am Heck des Aufliegers (2) angeordnete Rammpuffer (4) auf, die jeweils an der linken und der rechten Fahrzeugseite unter der Ladeflächenkante angeordnet sind. Die Anordnung der Rammpuffer (4) ist zusätzlich in der Fig. 3 dargestellt. Die Rammpuffer (4) sind vorzugsweise aus einem elastischen Material, z.B. Gummi, hergestellt und dienen dazu, das Fahrzeug bei Rückwärtsfahrt vor Beschädigungen infolge des Aufpralls auf ein Hindernis (3), z.B. eine Laderampe, zu schützen.

Zusätzlich zu den bisher beschriebenen, bei Fahrzeugzügen allgemein üblichen Merkmalen sind bei dem Fahrzeugzug gemäß Fig. 1 noch zwei jeweils in den Rammpuffern (4) angeordnete Abstandssensoren vorgesehen, die zur Vermeidung von Beschädigungen nicht aus den Rammpuffern(4) hinausragen. Die Anordnung eines Abstandssensors (6) in einem Rammpuffer (4) ist in der Fig. 2 näher dargestellt. Der Rammpuffer (4) weist eine Ausnehmung (5) auf, die nach Art eines Trichters, der in Rückwärtsfahrtrichtung des Fahrzeuges gerichtet ist, ausgebildet ist. Innerhalb dieser Ausnehmung (5) ist der Abstandssensor (6) angeordnet, der vorzugsweise als Ultraschallsensor ausgebildet ist. Dies bedeutet, daß der Abstandssensor (6) z.B. auf Anforderung von einem Steuergerät ein Schallsignal aussendet und bei Empfang von Reflexionen dieses Schallsignals ein Rückmeldesignal an das Steuergerät abgibt. Aus der zeitlichen Differenz zwischen der Anforderung einer Schallabgabe und dem Rückmeldesignal kann in bekannter Weise auf den Abstand (d) zwischen dem Abstandssensor und dem Hindernis (3) geschlossen werden.

In einer bevorzugten Ausführungsform der Erfindung sind in dem Abstandssensor elektronische Schaltungsmittel enthalten, mittels derer in einfacher Weise auswertbare digitale Signale erzeugt werden.

Die Ausnehmung (5) weist vorzugsweise eine Kontur auf, durch die der ausgesendete Schall des Abstandssensors (6) gebündelt wird, z.B. eine parabolische oder elliptische Kontur.

Die für die Erfindung relevanten Teile des Fahrzeuges gemäß den Figuren 1 und 2 sind in der Fig. 4 als Blockschaltbild dargestellt. Zur Vereinfachung sind von den im Bereich der Räder angeordneten Komponenten der Bremsanlage des gesamten Fahrzeugzuges nur die einem Rad zugeordneten Komponenten (11, 13, 15) dargestellt. In der Praxis sind mehreren bzw. allen Rädern jeweils eigene Komponenten der dargestellten Art zugeordnet. Ebenfalls zur Vereinfachung ist nur einer der beiden Abstandssensoren (6) dargestellt.

Ein elektronisches Steuergerät (10) ist in bekannter Weise mit einem Mikroprozessor ausgestattet, der ein verschiedene Steuer- und Regelalgorithmen aufweisendes Steuerprogramm ausführt. Hierfür werden in dem Steuergerät (10) verschiedene Eingangssignale (A, V, Z, R) ausgewertet und daraus Betätigungssignale (M, B) für den Antriebsmotor (17) oder die Bremsanlage des Fahrzeuges bestimmt. Die Bremsanlage ist in der Fig. 4 symbolisch durch eine Radbremse (15) und einen der Radbremse zugeordneten Bremsaktuator (13) dargestellt.

Die Radbremse (15) ist in üblicher Weise als Trommel- oder Scheibenbremse ausgebildet, die über ein Bremsgestänge von dem Bremsaktuator (13) mechanisch betätigt wird. Der Bremsaktuator (13) kann als elektrisch wirkender Aktuator, z.B. ein Elektromotor, oder als ein mit einem Druckmittel, z.B. Druckluft, beaufschlagbarer Stellzylinder in Verbindung mit einem elektrisch betätigbaren Ventil ausgebildet sein. Im letzteren Fall weist das Fahrzeug noch eine Druckmittelversorgungsanlage bekannter Bauart, z.B. mit einem Kompressor, auf.

Das Steuergerät (10) führt verschiedene Steuer- und Regelalgorithmen aus. Einer dieser Algorithmen besteht darin, daß in Abhängigkeit von einem Bremsanforderungssignal (Z), welches von einem von dem Fahrer mittels eines Bremspedals (12) zu betätigenden Bremswertgeber (14) abgegeben wird, das Bremsbetätigungssignal (B), z.B. mit dem Ziel eines geringen Bremsbelagverschleißes oder eines kurzen Bremsweges bestimmt wird. Das Bremsbetätigungssignal (B) wird dann dem Bremsaktuator (13) zugeführt.

In einer Erweiterung weist das Steuergerät (10) einen weiteren Algorithmus zur Ausführung des erfindungsgemäßen Verfahrens zur Unterstützung des Fahrers bei Rückwärtsfahrt auf. Hierzu werden in dem Steuergerät (10) ein Abstandssignal (A), welches den Abstand (d) des Fahrzeughecks zu dem Hindernis (3) repräsentiert und somit eine Funktion des Abstands darstellt (A = f(d)), sowie ein Rückwärtsfahrtsignal (R) von dem Getriebe (16) aus. Das Rückwärtsfahrtsignal (R) wird z.B. dann erzeugt, wenn der Fahrer einen Rückwärtgang einlegt. In Abhängigkeit von diesen Eingangssignalen erzeugt das Steuergerät (10) die Betätigungssignale (M, B) derart, daß in Abhängigkeit von dem Abstandssignal (A) die Geschwindigkeit des Fahrzeuges automatisch beeinflußt wird.

Wenn nun ein Fahrer sein Fahrzeug rückwärts an eine Laderampe heranfahren möchte, so wird er einen Rückwärtsgang einlegen und dann mit mehr oder weniger hoher Geschwindigkeit rückwärts an die Laderampe heranfahren. Bei einem Fahrzeug der in der Fig. 1 dargestellten Art, nämlich einem Fahrzeugzug aus Sattelzugmaschine und Auflieger, ist die Aufmerksamkeit des Fahrers hierbei zu einem großen Teil darauf gerichtet, den Fahrzeugzug gerade zu halten, d.h. ein Einknicken zwischen Sattelzugmaschine und Auflieger zu vermeiden. Hierfür wird der Fahrer zumeist in Richtung des Fahrzeughecks schauen, entweder direkt oder durch Verwendung der Rückspiegel. Insbesondere bei langen Lastzügen kann der Fahrer bei Annäherung an die Laderampe den verbleibenden Abstand nur schwer einschätzen.

Durch Anwendung der Erfindung wird der Fahrer jedoch in der folgend beschriebenen Weise unterstützt:

Nach Erkennung des Einlegens des Rückwärtsgangs durch Auswertung des Signals (R) überwacht das Steuergerät (10) das Abstandssignal (A) fortlaufend.

Hierfür gibt das Steuergerät (10) eine Anforderung zum Aussenden eines Schallsignals an einen Abstandssensor (6) aus und empfängt von dem Abstandssensor (6) eine Information über das Eintreffen einer Schallreflektion. Aus der zeitlichen Differenz ($\Delta t$) zwischen dem Zeitpunkt des Absendens der Schallwelle und dem Zeitpunkt des Empfangs einer Schallreflektion ermittelt das Steuergerät (10) ein Abstandssignal (A'), das den Abstand (d) repräsentiert, z.B. gemäß der Beziehung

$$A´ = K * \Delta t$$

wobei K eine Konstante ist, z.B. K = 333 m/s, wenn A' in der Einheit m (Meter) und $\Delta t$ in der Einheit s (Sekunde) angegeben werden.

Zusätzlich kann in Erweiterung der vorstehend beschriebenen grundsätzlichen Verfahrensweise zur Bestimmung des Abstandssignals (A') noch eine Temperaturkompensation vorgesehen sein.

Die vorstehend beschriebene Verfahrensweise wird für jeden der Abstandssensoren (6) ausgeführt. Als resultierendes Abstandssignal (A) wird dann fortlaufend der jeweils kleinere Wert der Einzelsignale (A') der beiden Abstandssensoren verwendet.

Sodann wird das Abstandssignal (A) in dem Steuergerät (10) bezüglich seiner Werte klassifiziert. Der Wertebereich des Abstandssignals (A) ist hierfür in drei Zonen eingeteilt:

Zone 1: Abstandssignal A > 3 m

Zone 2: Abstandssignal A zwischen 1 m und 3 m

Zone 3: Abstandssignal A < 1 m

Des weiteren wird eine zeitliche Ableitung (Å) des Abstandssignals fortlaufend berechnet. Außerdem wird das Geschwindigkeitssignal (V) ausgewertet. Als Fahrzeuggeschwindigkeit wird dann entweder das Geschwindigkeitssignal (V) oder die zeitliche Ableitung (Å) verwendet.

Je nach ermittelter Zone des Wertebereichs und aktueller Fahrzeuggeschwindigkeit (V bzw. Å) gibt das Steuergerät (10) unterschiedliche Betätigungssignale (M, B) ab. Hierbei kann der Fahrer durch Betätigung des Bremswertgebers (14) jederzeit eine stärkere Abbremsung anfordern.

Bei Vorliegen eines Abstandswertes der Zone 1, d.h. also auch bei beliebig großen Abstandswerten, wird die Antriebskraft des Antriebsmotors (17) reduziert und gegebenenfalls der Bremsaktuator (13) betätigt, derart, daß das Überschreiten eines vorbestimmten ersten Geschwindigkeitsgrenzwertes (V1) verhindert wird. Zusätzlich kann bereits zu diesem Zeitpunkt der Fahrer mittels eines akustischen oder optischen Signals gewarnt werden.

Bei Erreichen der Zone 2 wird das Fahrzeug bis zu einem zweiten vorbestimmten Geschwindigkeitsgrenzwert (V2) verzögert, der geringer ist als der erste Geschwindigkeitsgrenzwert (V1) . Die Verzögerung kann z.B. nach einer vorgegebenen Zeitfunktion erfolgen. Es ist auch möglich, den zweiten Geschwindigkeitsgrenzwert (V2) in Abhängigkeit von dem Abstandssignal (A) zu variieren, z.B. nach einer Exponential- oder Hyperbelfunktion, um hierdurch eine gleichmäßige, ruckfreie Abbremsung zu erzielen.

Bei Erreichen der Zone 3 wird die Geschwindigkeit des Fahrzeuges weiter verringert, derart, daß das Fahrzeug kurz vor Berührung der Laderampe zum Stillstand gebracht wird, z.B. bei einem Abstand von 5 cm. Dies hat den Vorteil, daß Beschädigungen infolge von Vertikalbewegungen beim Be- und Entladen des Fahrzeuges vermieden werden. Es ist jedoch auch möglich, das Fahrzeug mit einer vorbestimmten Geschwindigkeit (V3), die sehr gering zu wählen ist, gegen die Laderampe fahren zu lassen.

In einer bevorzugten Ausgestaltung der Erfindung wird in unmittelbarer Nähe des Fahrzeuges an der Laderampe, d.h. insbesondere in den Zonen 2 und 3, die Bestimmung der Fahrzeuggeschwindigkeit durch die zeitliche Ableitung (Å) des Abstandssignals gestützt. Es ist auch möglich, als Fahrzeuggeschwindigkeit dann ausschließlich die zeitliche Ableitung (Å) des Abstandssignals zu verwenden.

**Patentansprüche**

1. Verfahren zur Unterstützung des Fahrers eines Fahrzeuges (1, 2) bei Rückwärtsfahrt, wobei ein den Abstand des Fahrzeughecks zu einem Hindernis (3) charakterisierendes Abstandssignal (A) ausgewertet wird und in Abhängigkeit von dem Abstandssignal (A) die Geschwindigkeit des Fahrzeuges (1, 2) automatisch beeinflußt wird, **dadurch gekennzeichnet, daß** die Geschwindigkeit des Fahrzeuges (1, 2) automatisch auf den jeweiligen Werten des Abstandssignals (A) zugeordnete Geschwindigkeitswerte (V1, V2, V3) begrenzt wird.

2. Verfahren nach Anspruch 1, **dadurch gekennzeichnet, daß** zur Beeinflussung der Geschwindigkeit die Fahrzeugbremsanlage (13, 15) automatisch betätigt wird.

3. Verfahren nach einem der vorhergehenden Ansprüche, **dadurch gekennzeichnet, daß** zur Beeinflussung der Geschwindigkeit der Antriebsmotor (17) des Fahrzeuges (1, 2) automatisch beeinflußt wird.

4. Verfahren nach einem der vorhergehenden Ansprüche, **dadurch gekennzeichnet, daß** das Fahrzeug (1, 2) automatisch zum Stillstand gebracht wird, wenn das Abstandssignal (A) einen vorbestimmten Wert unterschreitet.

5. Verfahren nach einem der vorhergehenden Ansprüche, **dadurch gekennzeichnet, daß** für die Beeinflussung der Geschwindigkeit des Fahrzeuges (1, 2) die zeitliche Änderung (Å) des Abstandssignals (A) berücksichtigt wird.

6. Verfahren nach einem der vorhergehenden Ansprüche, **dadurch gekennzeichnet, daß** die Geschwindigkeit des Fahrzeuges (1, 2) aus der zeitlichen Änderung (Å) des Abstandssignals (A) bestimmt wird.

7. Verfahren nach einem der vorhergehenden Ansprüche, **dadurch gekennzeichnet, daß** die automatische Beeinflussung der Geschwindigkeit des Fahrzeuges (1, 2) nur dann durchgeführt wird, wenn der Rückwärtsgang eingelegt ist.

8. Einrichtung zur Unterstützung des Fahrers eines Fahrzeuges (1, 2) bei Rückwärtsfahrt, mit einem Abstandssensor (6), welcher ein Abstandssignal (A) abgibt, das den Abstand (d) des Fahrzeughecks zu einem Hindernis (3) charakterisiert, einer Auswerteeinrichtung (10), der das Abstandssignal (A) zugeführt wird und die Auswertesignale (B, M) abgibt, einem Mittel zur Beeinflussung der Geschwindigkeit des Fahrzeuges (1, 2), insbesondere eine Fahrzeugbremsanlage (13, 15) und/oder eine Fahrzeugmotorsteuerung (17), dem die Auswertesignale (B bzw. M) der Auswerteeinrichtung (10) zugeführt werden, wobei die Auswertesignale (B, M) derart bestimmt werden, daß in Abhängigkeit von dem Abstandssignal (A) die Geschwindigkeit des Fahrzeuges (1, 2) automatisch beeinflußt wird, **dadurch gekennzeichnet, daß** die Geschwindigkeit des Fahrzeuges (1, 2) automatisch auf den jeweiligen Werten des Abstandssignals (A) zugeordnete Geschwindigkeitswerte (V1, V2, V3) begrenzt wird.

9. Einrichtung nach Anspruch 8, **dadurch gekennzeichnet, daß** der Abstandssensor (6) im Bereich des Fahrzeughecks angeordnet ist.

10. Einrichtung nach Anspruch 9, **dadurch gekennzeichnet, daß** der Abstandssensor (6) in einer Ausnehmung (5) eines im Bereich des Fahrzeughecks angeordneten Rammpuffers (4) angeordnet ist.

11. Einrichtung nach einem der Ansprüche 8 bis 10, **dadurch gekennzeichnet, daß** die Auswerteeinrichtung (10) ein Teil einer elektrisch steuerbaren Bremsanlage (EBS) des Fahrzeuges (1, 2) ist.

12. Einrichtung nach einem der Ansprüche 8 bis 11, **dadurch gekennzeichnet, daß** als Abstandssensor (6) ein Ultraschallsensor, insbesondere ein schallfeldmodulierter Ultraschallsensor, eingesetzt wird.

13. Einrichtung nach einem der Ansprüche 8 bis 12, **dadurch gekennzeichnet, daß** der Auswerteeinrichtung (10) ein Rückwärtsfahrtsignal (R) von einem Fahrzeuggetriebe (16) zugeführt wird, wenn der Rückwärtsgang eingelegt ist, und daß die Auswertesignale (B, M) der Auswerteeinrichtung (10) nur bei Auftreten des Rückwärtsfahrtsignals (R) dem Mittel (13, 15, 17) zur Beeinflussung der Geschwindigkeit des Fahrzeuges (1, 2) zugeführt werden.

## Claims

1. Method of assisting the driver of a vehicle (1, 2) during reversing, a distance signal (A) characterizing the distance of the rear of the vehicle from an obstacle (3) being evaluated and the speed of the vehicle (1, 2) being influenced automatically in dependence upon the distance signal (A), **characterized in that** the speed of the vehicle (1, 2) is limited automatically to speed values (V1, V2, V3) assigned to the respective values of the distance signal (A).

2. Method according to claim 1, **characterized in that** to influence the speed, the vehicle braking system (13, 15) is operated automatically.

3. Method according to either one of the preceding claims, **characterized in that** to influence the speed, the drive motor (17) of the vehicle (1, 2) is influenced automatically.

4. Method according to any one of the preceding claims, **characterized in that** the vehicle (1, 2) is automatically brought to a halt when the distance signal (A) falls below a predetermined value.

5. Method according to any one ot the preceding claims, **characterized in that** for influencing the speed of the vehicle (1, 2), the change (Å) in the distance signal (A) with respect to time is taken into account.

6. Method according to any one of the preceding claims, **characterized in that** the speed of the vehicle (1, 2) is determined from the change (Å) in the distance signal (A) with respect to time.

7. Method according to any one of the preceding claims, **characterized in that** the automatic influencing of the speed of the vehicle (1, 2) is carried out only when reverse gear is engaged.

8. Device for assisting the driver of a vehicle (1, 2) during reversing, having a distance sensor (6), which emits a distance signal (A) characterizing the distance (d) of the rear of the vehicle from an obstacle (3); an evaluating device (10) to which the distance signal (A) is supplied and which emits evaluation signals (B, M); a means for influencing the speed of the vehicle (1, 2), especially a vehicle braking system (13, 15) and/or a vehicle motor control means (17), to which the evaluation signals (B, M) of the evaluating device (10) are supplied, the evaluation signals (B, M) being so determined that the speed of the vehicle (1, 2) is automatically influenced in dependence upon the distance signal (A), **characterized in that** the speed of the vehicle (1, 2) is limited automatically to speed values (V1, V2, V3) assigned to the respective values of the distance signal (A).

9. Device according to claim 8, <u>**characterized in that**</u> the distance sensor (6) is arranged in the region of the rear of the vehicle.

10. Device according to claim 9, <u>**characterized in that**</u> the distance sensor (6) is arranged in a recess (5) of an impact buffer (4) arranged in the region of the rear of the vehicle.

11. Device according to any one of claims 8 to 10, <u>**characterized in that**</u> the evaluating device (10) is part of an electrically controllable braking system (EBS) of the vehicle (1, 2).

12. Device according to any one of claims 8 to 11, <u>**characterized in that**</u> an ultrasound sensor, especially a sound-field modulated ultrasound sensor, is used as distance sensor (6).

13. Device according to any one of claims 8 to 12, <u>**characterized in that**</u> a reversing signal (R) is supplied to the evaluating device (10) by a vehicle gearbox (16) when reverse gear is engaged, and the evaluation signals (B, M) of the evaluating device (10) are supplied to the means (13, 15, 17) for influencing the speed of the vehicle (1, 2) only when the reversing signal (R) occurs.

**Revendications**

1. Procédé pour aider le conducteur d'un véhicule (1, 2) lors d'une marche arrière, dans lequel un signal de distance (A) caractérisant la distance de l'arrière du véhicule par rapport à un obstacle (3) est évalué et, selon le signal de distance (A), la vitesse du véhicule (1, 2) est automatiquement influencée, **caractérisé en ce que** la vitesse du véhicule (1, 2) est automatiquement limitée aux valeurs de vitesse (V1, V2, V3) associées aux valeurs respectives du signal de distance (A).

2. Procédé selon la revendication 1, **caractérisé en ce que** le système de freinage du véhicule (13, 15) est actionné automatiquement pour influencer la vitesse.

3. Procédé selon l'une des revendications précédentes, **caractérisé en ce que** le moteur d'entraînement (17) du véhicule (1, 2) est automatiquement influencé pour influencer la vitesse.

4. Procédé selon l'une des revendications précédentes, **caractérisé en ce que** le véhicule (1, 2) est automatiquement arrêté, lorsque le signal de distance (A) tombe au-dessous une valeur prédéterminée.

5. Procédé selon l'une des revendications précédentes, **caractérisé en ce que** la variation au cours du temps (Å) du signal de distance (A) est prise en considération pour l'influence de la vitesse du véhicule (1, 2).

6. Procédé selon l'une des revendications précédentes, **caractérisé en ce que** la vitesse du véhicule (1, 2) est déterminée à partir de la variation au cours du temps (Å) du signal de distance (A).

7. Procédé selon l'une des revendications précédentes, **caractérisé en ce que** l'influence automatique de la vitesse du véhicule (1, 2) est seulement effectuée lorsque la marche arrière est enclenchée.

8. Dispositif pour aider le conducteur d'un véhicule (1, 2) lors d'une marche arrière, équipé d'un capteur de distance (6), qui délivre un signal de distance (A), qui caractérise la distance (d) de l'arrière du véhicule par rapport à un obstacle (3), d'un disposition d'évaluation (10), auquel le signal de distance (A) est délivré et délivre les signaux d'évaluation (B, M), d'un moyen pour influencer la vitesse du véhicule (1, 2), en particulier un système de freinage de véhicule (13, 15) et/ou une commande de moteur de véhicule (17), à laquelle les signaux d'évaluation (B ou M) du dispositif d'évaluation (10) sont délivrés, où les signaux d'évaluation (B, M) sont déterminés de sorte que, selon le signal de distance (A), la vitesse du véhicule (1, 2) est automatiquement influencée, **caractérisé en ce que** la vitesse du véhicule (1, 2) est automatiquement limitée aux valeurs de vitesse (V1, V2, V3) associées aux valeurs respectives du signal de distance (A).

9. Dispositif selon la revendication 8, **caractérisé en ce que** le capteur de distance (6) est disposé dans la zone de l'arrière du véhicule.

**10.** Dispositif selon la revendication 9, **caractérisé en ce que** le capteur de distance (6) est disposé dans un évidement (5) d'un tampon caoutchouc (4) disposé dans la zone de l'arrière du véhicule.

**11.** Dispositif selon l'une des revendications 8 à 10, **caractérisé en ce que** le dispositif d'évaluation (10) est une partie d'un système de freinage (EBS) pouvant être commandé électriquement du véhicule (1, 2).

**12.** Dispositif selon l'une des revendications 8 à 11, **caractérisé en ce que**, en tant que capteur de distance (6), un capteur à ultrasons, en particulier un capteur à ultrasons modulé en fonction du champ acoustique, est utilisé.

**13.** Dispositif selon l'une des revendications 8 à 12, **caractérisé en ce qu'**un signal de marche arrière (R) est délivré par un réducteur de vitesse (16) au dispositif d'évaluation (10), lorsque la marche arrière est enclenchée, et **en ce que** les signaux d'évaluation (B, M) du dispositif d'évaluation (10) sont délivrés au moyen (13, 15, 17) lors de l'apparition du signal de marche arrière (R) pour influencer la vitesse du véhicule (1, 2).

Fig. 2

Fig. 3

Fig. 1

EP 0 972 679 B1

Fig. 4